(19) Europäisches Patentamt
European Patent Office
Office européen des brevets

(11) EP 0 690 748 B1

(12) **EUROPÄISCHE PATENTSCHRIFT**

(45) Veröffentlichungstag und Bekanntmachung des Hinweises auf die Patenterteilung:
**18.12.1996 Patentblatt 1996/51**

(21) Anmeldenummer: **94910421.0**

(22) Anmeldetag: **15.03.1994**

(51) Int. Cl.$^6$: **B01J 31/16**, B01J 31/12, C08F 4/60, B01J 31/14, C08F 10/00, C08F 4/50, C08F 4/52, C08F 4/58

(86) Internationale Anmeldenummer:
**PCT/EP94/00805**

(87) Internationale Veröffentlichungsnummer:
**WO 94/22576 (13.10.1994 Gazette 1994/23)**

(54) **KOORDINATIONS-KATALYSATORSYSTEME ENTHALTEND INTRAMOLEKULAR STABILISIERTE METALLORGANISCHE VERBINDUNGEN**

COORDINATION CATALYST SYSTEMS CONTAINING INTRAMOLECULARLY STABILIZED ORGANOMETALLIC COMPOUNDS

SYSTEMES CATALYSEURS DE COORDINATION CONTENANT DES COMPOSES ORGANO-METALLIQUES A STRUCTURE INTRAMOLECULAIRE STABILISEE

(84) Benannte Vertragsstaaten:
**AT BE CH DE FR GB IT LI NL**

(30) Priorität: **26.03.1993 DE 4309821**

(43) Veröffentlichungstag der Anmeldung:
**10.01.1996 Patentblatt 1996/02**

(73) Patentinhaber: **MERCK PATENT GmbH**
**64293 Darmstadt (DE)**

(72) Erfinder:
- **POHL, Ludwig**
  **D-64285 Darmstadt (DE)**
- **POETSCH, Eike**
  **D-64367 Mühltal (DE)**
- **HIRSCH, Hans-Ludwig**
  **D-64354 Reinheim (DE)**
- **SCHUMANN, Herbert**
  **D-12623 Berlin (DE)**
- **WEISS, Karin**
  **D-95447 Bayreuth (DE)**

(56) Entgegenhaltungen:
**EP-A- 0 478 031** **EP-A- 0 480 247**
**EP-A- 0 531 174** **FR-A- 1 327 965**
**FR-A- 2 317 312** **US-A- 4 176 220**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Rank Xerox (UK) Business Services
2.13.10/3.4

## Beschreibung

Die Erfindung betrifft Koordinations-Katalysatorsysteme, die intramolekular stabilisierte metallorganische Verbindungen enthalten. Gängige Koordinations-Katalysatorsysteme, die üblicherweise auf Übergangsmetallverbindungen der IV. bis VIII. Nebengruppe und metallorganischen Verbindungen der III. Hauptgruppe des Periodensystems der Elemente basieren, stellen außerordentlich vielseitige Katalysatoren dar, die in chemischen Reaktionen von und mit olefinisch ungesättigten Verbindungen eingesetzt werden. Es sind dies insbesondere Verfahren zur Herstellung von Olefin-Polymeren durch Koordinationspolymerisation und die Metathese von Alkenen oder Alkinen. Von wesentlicher technischer Bedeutung ist die Herstellung von Polyethylen erhöhter Dichte (high density polyethylene, HDPE) sowie von Polymeren und Kopolymeren von Ethylen, Propylen oder anderen 1-Alkenen und Alkinen. Durch katalysierte Metathese können aus unsymetrischen Alkenen bzw. Alkinen höhere ungesättigte Kohlenwasserstoffverbindungen gezielt hergestellt und aus ungesättigten zyklischen Kohlenwasserstoffverbindungen langkettige ungesättigte Kohlenwasserstoffe erhalten werden. Letztere finden beispielsweise Anwendung bei der Herstellung von Elastomeren. Darüberhinaus finden Koordinations-Katalysatoren in weiteren Reaktionen Anwendung, wie etwa bei der Alkenhydrierung oder in metallorganischen Synthesen.

Gemäß den bisherigen wissenschaftlichen Erkenntnissen zum Wirkungsmechanismus von Koordinations-Katalysatoren wird davon ausgegangen, daß jeweils eine Übergangsmetallverbindung das katalytisch aktive Zentrum bildet, an das die olefinisch ungesättigte Verbindung in einem ersten Schritt koordinativ anbindet. Die Olefinpolymerisation erfolgt über eine Koordination der Monomeren und eine nachfolgende Insertionsreaktion in eine Übergangsmetall-Kohlenstoff- oder eine Übergangsmetall-Wasserstoff-Bindung. Die Anwesenheit von metallorganischen Verbindungen in den Koordinations-Katalysatorsystemen bzw. während der katalysierten Reaktion ist erforderlich, um den Katalysator durch Reduktion und gegebenenfalls Alkylierung oder Bildung eines komplexen Systems zu aktivieren bzw. seine Aktivität aufrechtzuerhalten. Diese Verbindungen werden daher auch als Co-Katalysatoren bezeichnet. Die das katalytisch aktive Übergangsmetallatom enthaltende Verbindung wird als Primär- oder Präkatalysator bezeichnet.

Die bekanntesten industriell angewendeten Katalysatorsysteme für die Koordinationspolymerisation sind vom Typ der "Ziegler-Natta-Katalysatoren" und vom Typ der "Phillips-Katalysatoren". Erstere bestehen aus dem Reaktionsprodukt eines Metallalkyls oder -hydrids der Elemente der ersten drei Hauptgruppen des Periodensystems und einer reduzierbaren Verbindung eines Übergangsmetallelements der IV. bis VII. Nebengruppe, wobei die am häufigsten angewendete Kombination aus einem Aluminiumalkyl, wie Diethylaluminiumchlorid, und Titan(IV)chlorid besteht. Neuere hochaktive Ziegler-Natta-Katalysatoren stellen Systeme dar, in denen die Titanverbindung chemisch an der Oberfläche von Magnesiumverbindungen, wie insbesondere Magnesiumchlorid, fixiert ist.

Als Phillips-Katalysator kommen auf anorganischen Trägern gebundene Chromverbindungen zum Einsatz, die eine Reduktion bzw. Aktivierung vornehmlich durch metallorganische Verbindungen erfahren. Als katalytisch aktive Spezies wird Cr(II) angesehen ("reduzierter Phillips-Katalysator"). Als Co-Katalysatoren kommen auch hier vornehmlich Aluminiumalkylverbindungen sowie Alumoxanverbindungen zum Einsatz.

Neuere Entwicklungen zu besonders leistungsfähigen Polymerisationskatalysatoren richten sich auf Metallocen-Verbindungen. Unter der Bezeichnung "Kaminsky-Katalysatoren" sind beispielsweise Zirkonocen-Verbindungen bekannt, die Cyclopentadienylkomplexe von Zirkonalkylen oder -halogeniden sowie Derivate hiervon darstellen, die mit Hilfe von Aluminium-, Bor- oder Phosphortrialkylen oder Alumoxan aktiviert werden.

Die praktische Anwendung dieser Katalysatoren und verwandter Typen in den in großer Vielfalt entwickelten Verfahrensvarianten kann Produkte mit zum Teil höchst unterschiedlichen Eigenschaften liefern. Bei Olefin-Polymeren, die als Werkstoffe von allgemein bekannter Bedeutung sind, richten sich Einsetzbarkeit und Einsatzbereich eigenschaftsbedingt zum einen nach der Art der zugrundeliegenden Monomere bzw. nach Auswahl und Verhältnis der Comonomere und den das Polymer charakterisierenden typischen physikalischen Parametern, wie mittlere Molmasse, Molmassenverteilung, Verzweigungsgrad, Vernetzungsgrad, Kristallinität, Dichte, Anwesenheit funktioneller Gruppen im Polymer usw., zum anderen nach verfahrenstechnisch bedingten Eigenschaffen, wie Gehalt an niedermolekularen Verunreinigungen, Anwesenheit von Katalysatorresten und letztendlich nach den Kosten.

Zur Beurteilung der Leistungsfähigkeit eines Koordinations-Katalysatorsystems sind neben der Verwirklichung der gewünschten Produkteigenschaffen weitere Faktoren entscheidend, wie die Aktivität des Katalysatorsystems, also die für eine wirtschaftliche Umsetzung einer vorgegebenen Menge Olefin erforderliche Menge an Katalysator, der Produktumsatz pro Zeiteinheit und die Produktausbeute, der Verlust an Katalysator sowie die Wiederverwendbarkeit des Katalysators. Es werden daher Katalysatorsysteme mit einer möglichst hohen Produktivität aber auch mit hoher Spezifität zugunsten eines geringen Verzweigungsgrades und einer hohen Stereoregularität des Polymers gesucht.

Wesentlich ist aber auch die Frage der Stabilität und der Handhabbarkeit des Katalysators bzw. seiner Komponenten. Praktisch alle bekannten Koordinations-Katalysatoren sind äußerst luft- und feuchtigkeitsempfindlich. Durch Zutritt von (Luft-)Sauerstoff und/oder Wasser werden die Koordinations-Katalysatoren in ihrer Aktivität vermindert oder irreversibel zerstört. Reduzierte Phillips-Katalysatoren, beispielsweise, glühen bei Luftzutritt sofort auf und sind dann unbrauchbar. Die Koordinations-Katalysatoren müssen daher bei Herstellung, Lagerung und Einsatz strikt vor Luft- und Feuchtigkeitszutriff bewahrt werden, was naturgemäß die Handhabung erschwert und den erforderlichen Aufwand

erhöht.

Übliche Katalysatorsysteme sind auch empfindlich gegenüber Stoffen, die elektronenreiche Elemente wie etwa Sauerstoff oder Stickstoff enthaften. Verbindungen wie Alkohole und Amine oder auch polare Monomere, die als Comonomere oder Additive für das Polymer von Interesse sein können, desaktivieren den Katalysator.

Noch empfindlicher in dieser Hinsicht und daher noch schwieriger handhabbar sind die als Aktivatoren bzw. Cokatalysatoren einzusetzenden metallorganischen Verbindungen, wie insbesondere die überwiegend hierfür verwendeten Aluminiumalkylverbindungen. Gerade diese stellen aufgrund ihrer extremen Empfindlichkeit und Selbstentzündlichkeit in der Praxis ein ernstes Problem dar.

Es bestand daher ein besonderes Bedürfnis, weniger empfindliche metallorganische Verbindungen aufzufinden, die sich aber trotzdem als aktivierende Komponenten in Koordinations-Katalysatorsystemen eignen. Mit diesen Ersatzverbindungen sollten Koordinations-Katalysatorsysteme mit zumindest gleichen Anwendungseigenschaften und möglichst noch größerer Einsatzbreite zugänglich gemacht werden können. Diese sollten selbst wiederum eine geringere Empfindlichkeit und damit eine problemlosere Handhabbarkeit aufweisen.

Es wurde nun gefunden, daß sich intramolekular stabilisierte metallorganische Verbindungen der Formel I

$$X^{1}_{l}\text{-M-}[Z]_m \qquad (I)$$

worin

M ein Element aus der Gruppe Mg, B, Al, Ga, In, Sn, Zn, Ti, Zr, Lanthaniden,

l die Zahlen 0, 1, 2, 3,

m die Zahien 1, 2, 3, 4,

wobei l + m der Oxidationsstufe von M entspricht,

$X^1$ $CR^1R^2R^3$, $NR^1R^2$, $OR^1$,

$R^1$, $R^2$, $R^3$ H, $C_{1-6}$-Alkyl, wobei für den Fall, daß l = 2, zwei Reste $R^1$ zusammen auch eine $C_{2-6}$-Alkylenbrücke bilden können,

Z $(CH_2)_n$-$X^2$-Y oder

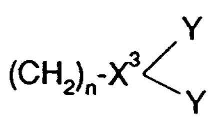

n die Zahlen 0, 1, 2, 3,

$X^2$ $CH_2$, NH oder ein 5- oder 6-gliedriger aromatischer, cycloaliphatischer oder heteroaromatischer Ring, jeweils in o-Position mit Y substituiert,

$X^3$ CH, N oder ein 5- oder 6-gliedriger aromatischer, cycloaliphatischer oder heteroaromatischer Ring, jeweils in o,o'-Position mit Y substituiert,

Y $(CH_2)_o$-$NR^4R^5$, $(CH_2)_o$-$PR^4R^5$, $(CH_2)_o$-$OR^4$, $(CH_2)_o$-$SR^4$,

o die Zahlen 1, 2, 3,

$R^4$, $R^5$ H oder $C_{1-6}$-Alkyl bedeuten,

mit der Maßgabe, daß im Falle M = B, Al, Ga, In und Z = $(CH_2)_n$-$X^2$-Y, m nicht 1 ist, vorzüglich als Komponenten in Koordinations-Katalysatorsystemen eignen.

Gegenstand der Erfindung ist demnach die Verwendung von intramolekular stabilisierten metallorganischen Verbindungen der Formel I in Koordinations-Katalysatorsystemen.

Gegenstand der Erfindung ist insbesondere die Verwendung dieser Verbindungen als Komponenten in Koordinations-Katalysatorsystemen für die Koordinationspolymerisation und die Metathese von Alkenen und Alkinen.

Gegenstand der Erfindung sind weiterhin Koordinations-Katalysatorsysteme, insbesondere auf Basis von Übergangsmetallverbindungen der IV. bis VIII. Nebengruppe des Periodensystems der Elemente und metallorganischen Verbindungen, wobei diese mindestens eine Verbindung der Formel I enthalten.

Gegenstand der Erfindung sind darüberhinaus Verfahren zur Herstellung von Polymeren durch Koordinationspolymerisation sowie zur Herstellung von ungesättigten Kohlenwasserstoffverbindungen durch katalysierte Metathese-Reaktion, bei denen Koordinations-Katalysatorsysteme eingesetzt werden, die mindestens eine Verbindung der Formel I enthalten.

In Formel I steht M für ein Element ausgewählt aus der Gruppe Magnesium (Mg), Bor (B), Aluminium (Al), Gallium (Ga), Indium (In), Zinn (Sn), Zink (Zn), Titan (Ti), Zirkon (Zr) und die Lanthaniden, wie insbesondere Cer (Ce), Praseodym (Pr) und Neodym (Nd). In den Verbindungen der Formel I liegt das Element M in aller Regel in der jeweils charakteristischen maximalen Oxidationsstufe vor, wie z.B. der Oxidationsstufe +II für Mg und Zn, +III für B, Al, Ga, In und die Lanthaniden, +IV für Sn, Ti und Zr. Entsprechend tragen diese Elemente 2 bis 4 Reste $X^1$ und/oder Z, wobei immer mindestens ein Rest Z vorhanden ist.

$X^1$ steht für $CR^1R^2R^3$, $NR^1R^2$ und $OR^1$, wobei die Reste $R^1$, $R^2$, $R^3$ Wasserstoff oder $C_{1-6}$-Alkyl sein können. Im einfachsten Fall ist $X^1$ ein Kohlenwasserstoffrest mit bis zu 7 C-Atomen, der auch verzweigt sein kann, wie beispielsweise Methyl, Ethyl, Propyl, i-Propyl, t-Butyl. $X^1$ kann auch eine Amino- oder eine Hydroxygruppe sein, die mit $C_{1-6}$-Alkyl substituiert sein können. Im Falle von zwei Resten $X^1$ können diese auch über eine Alkylenbrücke mit 2 bis 6 C-Atomen verbunden sein.

Der Substituent Z trägt über eine Spacer-Gruppierung $(CH_2)_n$-$X^2$ bzw. $(CH_2)_n$-$X^3$ eine bzw. zwei Gruppen Y, enthaltend ein Heteroatom N, P, O oder S in Form einer Amino-, Phosphino-, Hydroxy- oder Thiolgruppe, jeweils gegebenenfalls mit $C_{1-6}$-Alkyl substituiert. $X^2$ bzw. $X^3$ sind direkt oder über eine Alkylengruppe mit 1 bis 3 C-Atomen mit dem Metall M verbunden.

$X^2$ steht für $CH_2$, NH oder einen in o-Position mit Y substituierten 5- oder 6-gliedrigen aromatischen, cycloaliphatischen oder heteroaromatischen Ring. $X^3$ steht für CH, N oder einen in o,o'-Position mit zwei Resten Y substituiertem 5- oder 6-gliedrigen aromatischen, cycloaliphatischen oder heteroaromatischen Ring. Als 5-gliedriger Ring kommt vornehmlich Cyclopentyl, Cyclopentenyl und Cyclopentadienyl in Betracht. Als 6-gliedriger Ring kommt vornehmlich Phenyl, 4-Pyridyl, Cyclohexyl, Cyclohexenyl und Cyclohexadienyl in Betracht. Vorzugsweise ist $X^2$ bzw. $X^3$ ein Phenylring.

Das Heteroatom von Y ist mit $X^2$ bzw. $X^3$ über eine Alkylengruppe mit 1 bis 3 C-Atomen verbunden.

Bevorzugte Strukturen von Z sind

(a) - $(CH_2)_p$-$NR^4R^5$  p = 3-6

(b)

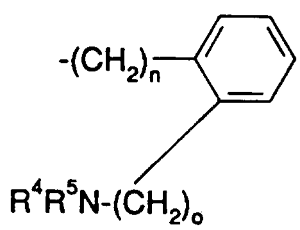

n = 0-2
o = 1-2

(c)

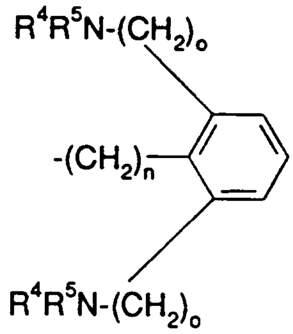

n = 0-2
o = 1-2

Die Verbindungen der Formel I sind intramolekular stabilisiert durch koordinative Elektronenübertragung von dem Stickstoff-, Phophor-, Sauerstoff- oder Schwefelatom aus der oder den Gruppen Z auf das elektronenarme Metallatom M. Sie besitzen daher im Vergleich zu üblichen Metallalkylen eine hohe Stabilität gegenüber (Luft-)Sauerstoff und Feuchtigkeit. Sie sind nicht selbstentzündlich und damit einfach zu handhaben. Diese Stabilisierung ist auf die intramolekulare koordinative Bindung zurückzuführen.

Typische Beispiele von Verbindungen der Formel I sind:

Methyl-(3-dimethylaminopropyl)magnesium
Bis(3-dimethylaminopropyl)magnesium
Methyl-(3-dimethylaminopropyl)zink
Bis(3-dimethylaminopropyl)zink
Bis(3-diethylaminopropyl)zink
Trimethyl(3-dimethylaminopropyl)zinn
Dimethyl-bis(3-dimethylaminopropyl)zinn
Dimethyl-bis(3-dimethylaminopropyl)titan
Dimethyl-bis(3-dimethylaminopropyl)zirkon
Dimethyl(3-dimethylaminopropyl)bor
Dimethyl(3-dimethylaminopropyl)cer
Bis-(3-dimethylaminopropyl)methylindium
Bis-(3-dimethylaminopropyl)methylaluminum
Bis-(3-dimethylaminopropyl)ethylgallium
Bis-(3-dimethylaminopropyl)ethylindium
Bis-(3-dimethylaminopropyl)ethylaluminium
Bis-(3-dimethylaminopropyl)propylgallium
Bis-(3-dimethylaminopropyl)propylindium
Bis-(3-dimethylaminopropyl)propylaluminium
Bis-(3-diethylaminopropyl)methylgallium
Bis-(3-diethylaminopropyl)methylindium
Bis-(3-diethylaminopropyl)methylaluminium
Bis-(3-dimethylaminoethyl)methylgallium
Bis-(3-dimethylaminoethyl)methylindium
Bis-(3-dimethylaminoethyl)methylaluminium
Bis-(3-dimethylaminoethyl)methylgallium
Bis-(3-dimethylaminoethyl)methylindium
Bis-(3-dimethylaminoethyl)methylaluminium
Bis-(3-dimethylaminoethyl)ethylgallium
Bis-(3-dimethylaminoethyl)ethylindium
Bis-(3-dimethylaminoethyl)ethylaluminium
Bis-(3-dimethylaminobutyl)methylgallium
Bis-(3-dimethylaminobutyl)methylindium
Bis-(3-dimethylaminobutyl)methylaluminium

Bis-(3-dimethylaminobutyl)ethylgallium
Bis-(3-dimethylaminobutyl)ethylindium
Bis-(3-dimethylaminobutyl)ethylaluminium
[2,6-Bis(dimethylaminomethylen)phenyl]dimethylgallium
[2,6-Bis(dimethylaminomethylen)phenyl]dimethylaluminium
[2,6-Bis(dimethylaminomethylen)phenyl]diethylindium
[2,6-Bis(dimethylaminomethylen)phenyl]di-n-propylindium
[2,6-Bis(diethylaminomethylen)phenyl]di-n-propylindium
[2,6-Bis(diethylaminomethylen)phenyl]dimethylindium
[2,6-Bis(dimethylaminomethylen)phenyl]diethylgallium
[2,6-Bis(diethylaminomethylen)phenyl]di-n-propylgallium
[2,6-Bis(diethylaminomethylen)phenyl]dimethylgallium
[2,6-Bis(diethylaminomethylen)phenyl]diethylgallium
[2,6-Bis(diethylaminomethylen)phenyl]di-n-propylgallium
[2,6-Bis(dimethylaminomethylen)phenyl]dimethylaluminium
[2,6-Bis(dimethylaminomethylen)phenyl]diethylaluminium
[2,6-Bis(dimethylaminomethylen)phenyl]di-n-propylaluminium
[2,6-Bis(diethylaminomethylen)phenyl]dimethylaluminium
[2,6-Bis(diethylaminomethylen)phenyl]diethylaluminium
[2,6-Bis(diethylaminomethylen)phenyl]di-n-propylaluminium
[3-(1,5-Dimethylamino)pentyl]dimethylgallium
[3-(1,5-Dimethylamino)pentyl]diethylgallium
[3-(1,5-Dimethylamino)pentyl]di-n-propylgallium
[3-(1,5-Diethyiamino)pentyl]dimethylgallium
[3-(1,5-Diethylamino)pentyl]diethylgallium
[3-(1,5-Diethylamino)pentyl]di-n-propylgallium
[3-(1,5-Dimethylamino)pentyl]dimethylindium
[3-(1,5-Dimethylamino)pentyl]diethylindium
[3-(1,5-Dimethylamino)pentyl]di-n-propylindium
[3-(1,5-Diethylamino)pentyl]dimethylindium
[3-(1,5-Diethylamino)pentyl]diethylindium
[3-(1,5-Diethylamino)pentyl]di-n-propylindium
[3-(1,5-Dimethylamino)pentyl]dimethylaluminium
[3-(1,5-Dimethylamino)pentyl]diethylaluminium
[3-(1,5-Dimethylamino)pentyl]di-n-propylaluminium
[3-(1,5-Diethylamino)pentyl]dimethylaluminium
[3-(1,5-Diethylamino)pentyl]diethylaluminium
[3-(1,5-Diethylamino)pentyl]di-n-propylaluminium
[4-(1,7-Dimethylamino)heptyl]dimethylgallium
[4-(1,7-Dimethylamino)heptyl]diethylgallium
[4-(1,7-Dimethylamino)heptyl]di-n-propylgallium
[4-(1,7-Diethylamino)heptyl]dimethylgallium
[4-(1,7-Diethylamino)heptyl]diethylgallium
[4-(1,7-Diethylamino)heptyl]di-n-propylgallium
[4-(1,7-Dimethylamino)heptyl]dimethylindium
[4-(1,7-Dimethylamino)heptyl]diethylindium
[4-(1,7-Dimethylamino)heptyl]di-n-propylindium
[4-(1,7-Diethylamino)heptyl]dimethylindium
[4-(1,7-Diethylamino)heptyl]diethylindium
[4-(1,7-Diethylamino)heptyl]di-n-propylindium
[4-(1,7-Dimethylamino)heptyl]dimethylaluminium
[4-(1,7-Dimethylamino)heptyl]diethylaluminium
[4-(1,7-Dimethylamino)heptyl]di-n-propylaluminium
[4-(1,7-Diethylamino)heptyl]dimethylaluminium
[4-(1,7-Diethylamino)heptyl]diethylaluminium
[4-(1,7-Diethylamino)heptyl]di-n-propylaluminium
Dimethylgallium[bis(2-dimethylaminoethyl)]amid
Diethylgallium[bis(2-dimethylaminoethyl)]amid
Di-n-propylgallium[bis(2-dimethylaminoethyl)]amid

Dimethylgallium[bis(2-diethylaminoethyl)]amid
Diethylgallium[bis(2-diethylaminoethyl)]amid
Di-n-propylgallium[bis(2-diethylaminoethyl)]amid
Dimethylindium[bis(2-dimethylaminoethyl)]amid
Diethylindium[bis(2-dimethylaminoethyl)]amid
Di-n-propylindium[bis(2-dimethylaminoethyl)]amid
Dimethylindium[bis(2-diethylaminoethyl)]amid
Diethylindium[bis(2-diethylaminoethyl)]amid
Di-n-propylindium[bis(2-dimethylaminoethyl)]amid
Dimethylaluminium[bis(2-dimethylaminoethyl)]amid
Diethylaluminium[bis(2-dimethylaminoethyl)]amid
Di-n-propylaluminium[bis(2-dimethylaminoethyl)]amid
Dimethylaluminium[bis(2-diethylaminoethyl)]amid
Diethylaluminium[bis(2-diethylaminoethyl)]amid
Di-n-propylaluminium[bis(2-diethylaminoethyl)]amid
Dimethylgallium[bis(2-dimethylaminopropyl)]amid
Diethylgallium[bis(2-dimethylaminopropyl)]amid
Di-n-prophylgallium[bis(2-dimethylaminopropyl)]amid
Dimethylgallium[bis(2-diethylaminopropyl)]amid
Diethylgallium[bis(2-diethylaminopropyl)]amid
Di-n-propylgallium[bis(2-diethylaminopropyl)]amid
Dimethylindium[bis(2-dimethylaminopropyl)]amid
Diethylindium[bis(2-dimethylaminopropyl)]amid
Di-n-propylindium[bis(2-dimethylaminopropyl)]amid
Dimethylindium[bis(2-diethylaminopropyl)]amid
Diethylindium[bis(2-diethylaminopropyl)]amid
Di-n-propylindium[bis(2-diethylaminopropyl)]amid
Dimethylaluminium[bis(2-dimethylaminopropy])]amid
Diethylaluminium[bis(2-dimethylaminopropyl)]amid
Di-n-propylaluminium[bis(2-dimethylaminopropyl)]amid
Dimethylaluminium[bis(2-diethylaminopropyl)]amid
Diethylaluminium[bis(2-diethylaminopropyl)]amid
Di-n-propylaluminium[bis(2-diethylaminopropyl)]amid

Die meisten der intramolekular stabilisierten metallorganischen Verbindungen der Formel I sind als solche an sich bekannt. So sind derartige Verbindungen beispielsweise in DE 4213292, DE 4109723 sowie in DE 3913165 beschrieben. Den genannten Dokumenten ist auch zu entnehmen, daß die Verbindungen gegenüber Luft und Feuchtigkeit stabil sind.

Jedoch werden sie nur zur Verwendung für die Herstellung dünner Metall- bzw. Verbindungshalbleiterschichten durch Gasphasenabscheidung vorgeschlagen. Ein Hinweis auf die Eignung dieser Verbindungen als aktivierende Komponenten in Koordinations-Katalysatorsystemen für die Olefin-Polymerisation oder Metathese ist diesen Dokumenten nicht zu entnehmen.

Die Verbindungen der Formel I werden nach an sich bekannten Methoden hergestellt, wie sie in der Literatur (z.B. G. Bähr, P. Burba, Methoden der Organischen Chemie, Bd. XIII/4, Georg Thieme Verlag, Stuttgart (1970)) beschrieben sind, und zwar unter Reaktionsbedingungen, die für die genannten Umsetzungen bekannt und geeignet sind. Dabei kann man auch von an sich bekannten, hier nicht erwähnten Varianten Gebrauch machen.

So können diese Verbindungen etwa hergestellt werden, indem man Metallalkylchloride mit einem Alkalimetallorganyl der entsprechenden Lewisbase oder einer Grignard-Verbindung in einem inerten Lösungsmittel umsetzt.

Nähere Details zur Synthese derartiger Verbindungen können den vorgenannten Patentdokumenten oder Z. anorg. allg. Chem. 462, 152 (1980) und 505, 127 (1983) entnommen werden.

Bei dem erfindungsgemäßen Einsatz der Verbindungen der Formel I als aktivierende Komponenten in Koordinations-Katalysatorsystemen hat sich überaschend herausgestellt, daß die Katalysatorsysteme hierdurch weniger empfindlich gegenüber (Luft-)Sauerstoff und Feuchtigkeit reagieren, so daß nicht derartig strikte Schutzmaßnahmen getroffen werden müssen, wie sie bei mit üblichen Aluminiumalkylen aktivierten Koordinations-Katalysatoren erforderlich sind.

Dieser Befund ist besonders überaschend und nicht vorhersehbar, zumal der Einsatz strukturell ähnlicher intramolekular stabilisierter aluminiumorganischer Verbindungen, wie beispielsweise (3-Diethylaminopropyl)-diisobutylaluminium, in bestimmten Koordinations-Katalysatorsystemen bereits bekannt ist. In US 3,154,528 werden mit derartigen Verbindungen aktivierte Koordinations-Katalysatorsysteme auf Basis von Vanadiumtetrachlorid offenbart, die jedoch

als genauso luft- und feuchtigkeitsempfindlich beschrieben werden, wie übliche Koordinations-Katalysatorsysteme. JP 60-240706, JP 61-007305, JP 61-252205, JP 62-100505 und JP 62-138506 offenbaren Koordinations-Katalysatorsysteme auf Basis von Titanverbindungen, die ebenfalls solche aluminiumorganische Verbindungen sowie noch weitere, als Elektronen-Donatoren fungierende Verbindungen enthalten, die aber zunächst mit üblichen Aluminiumalkylen aktiviert werden. Aufgrund der Anwesenheit letzterer sind diese Katalysatorsysteme ebenfalls äußerst empfindlich und bedürfen der üblichen strikten Schutzmaßnahmen.

Bei den erfindungsgemäßen Koordinations-Katalysatorsystemen hat ein moderater Zutritt von Luft, Sauerstoff oder Feuchtigkeit keine Zerstörung oder drastische Aktivitätsverringerung zur Folge. Entsprechende Koordinations-Katalysatorsysteme auf Basis von trägergebundenem Chrom glühen beispielsweise an Luft nicht auf, sondern sind weiterhin unverändert gut einsetzbar. Dies hat die sehr vorteilhafte Folge, daß die Handhabung der erfindungsgemäßen Koordinations-Katalysatorsysteme bei Herstellung, Lagerung und Gebrauch wesentlich unproblematischer ist. Auf den aufwendigen Ausschluß bereits von Spuren von Luft, Sauerstoff und Feuchtigkeit in den bei der Polymerisation eingesetzten Lösungsmitteln, Monomeren und Schutzgasen kann daher verzichtet werden.

Darüberhinaus bewirken die erfindungsgemäß in Koordinations-Katalysatorsystemen einzusetzenden Verbindungen der Formel I weitere vorteilhafte Ergebnisse beim bestimmungsgemäßen Einsatz in Polymerisationsverfahren und Metathesereaktionen. So zeigen die entsprechenden erfindungsgemäßen Koordinations-Katalysatorsysteme generell eine äußerst hohe Aktivität und Produktivität. Dies hat zur Folge, daß mit der eingesetzten Menge an Katalysator mehr Produkt gebildet wird bzw. die erforderliche Menge an Katalysator entsprechend reduziert werden kann. Vorteilhatte Folgen hiervon sind, daß entsprechend weniger an Katalysator vom Produkt abgetrennt werden muß bzw. Produkte mit geringerem Restgehalt an Katalysator erhalten und nicht zuletzt auch die Kosten aufgrund geringeren Katalysatorverbrauchs reduziert werden. Naturgemäß sind hierbei zahlreiche weitere Faktoren mit beeinflußend, wie qualitative und quantitative Zusammensetzung des Katalysatorsystems, Natur der Monomeren bzw. die Zusammensetzung bei der Copolymerisation von Monomergemischen, Reaktionsbedingungen und Fahrweise bei der Polymerisation. Der Fachmann kann jedoch ohne weiteres mit Hilfe von Routineversuchen das für seine Zwecke geeignetste Katalysatorsystem ermitteln und optimieren.

Weiter zeigt sich für die erfindungsgemäßen Koordinations-Katalysatorsysteme bei der Olefin-Polymerisation eine ausgeprägte Spezifität in Richtung auf hohe Molmassen und engere Molmassenverteilungen. Auch diese Befunde sind abhängig von zusätzlichen Faktoren, wie Zusammensetzung des Katalysatorsystems, Natur der Monomere und angewendete Verfahrensbedingungen, können aber ohne weiteres für den jeweiligen Anwendungsfall optimiert werden.

Bei der Alkenpolymerisation können im gegebenen Fall die erfindungsgemäßen Katalysatoren ausgeprägt stereoselektiv in Richtung auf isotaktische Polymere wirken. Bei der Metathese bzw. ringöffnenden Metathesepolymerisation können bestimmte Stereoisomere bzw. Produkte mit bestimmter Konfiguration bevorzugt entstehen. Diese Stereoselektivität läßt sich darüberhinaus durch gezielte Strukturierungen der Verbindungen der Formel I beeinflußen. Sind etwa in Formel I für den Fall, daß $X^1$ $CR^1R^2R^3$ bedeutet, die Reste $R^1$, $R^2$ und $R^3$ jeweils voneinander verschieden, so weist der Rest $X^1$ ein asymmetrisches C-Atom auf, durch das bei Polymerisation oder Metathese von 1-Alkenen eine stereoselektive Induktion bewirkt werden kann.

Koordinations-Katalysatorsysteme, die die erfindungsgemäßen zyklischen metallorganischen Verbindungen der Formel I enthalten, eignen sich vorzugsweise für die Polymerisation von 1-Alkenen und 1-Alkinen, wobei sowohl Homopolymere aus einheitlichen Monomeren als auch Copolymere aus Monomergemischen erhalten werden können. Weiterhin eignen sie sich für die Metathese von 1-Alkenen und 1-Alkinen sowie für die ringöffnende Metathese von zyklischen Alkenen.

Koordinations-Katalysatorsysteme vom "Ziegler-Natta"- und vom "Phillips"-Typ, die mit den erfindungsgemäßen Verbindungen der Formel I als Cokatalysatoren aktiviert werden, zeigen darüberhinaus die überraschende Eigenschaft, daß mit ihnen auch polare olefinisch ungesättigte Monomere polymerisiert werden können. Bekanntlich lassen sich mit konventionellen Katalysatorsystemen im wesentlichen nur 1-Alkene und 1-Alkine polymerisieren. Styrol, beispielsweise, läßt sich kaum noch und noch polarere Monomere wie Vinylverbindungen und Acrylsäurederivate lassen sich gar nicht der Koordinationspolymerisation unterziehen. Vermutlich liegt dies daran, daß diese polaren Verbindungen die Metallatome von Primär- und/oder Cokatalysator durch eine starke koordinative Bindung desaktivieren. Durch die intramolekulare koordinative Absättigung bei den Verbindungen der Formel I ist dies jedoch nicht mehr möglich, was die bemerkenswerte Aktivität der erfindungsgemäßen Katalysatorsysteme gegenüber polaren Monomeren erklärt.

Der erfindungsgemäße Einsatz der Verbindungen der Formel I als aktivierende Komponenten in Koordinations-Katalysatorsystemen erfolgt völlig analog und im Ersatz zu den bisher üblichen Metallorganylen und insbesondere den empfindlichen und gefährlichen Aluminiumalkylen. Aufgrund der gesteigerten Aktivität kann der Anteil an metallorganischen Verbindung im Katalysatorsystem wie auch die Menge an Katalysator bei der Umsetzung reduziert werden. Die Herstellung und Anwendung der Katalysatoren erfolgt in an sich bekannter Weise, wie sie für das jeweilige System und den jeweiligen Einsatz üblich ist. In der Regel wird bei der Olefin-Polymerisation und bei der Metathese mit heterogener Katalyse im Suspensionsverfahren gearbeitet. Hierzu wird zunächst aus der katalytische aktiven Übergangsmetallverbindung und einem feinteillgen Trägermaterial der trägergebundene Präkatalysator hergestellt, dieser erforderlichenfalls in üblicher Weise aktiviert bzw. voraktiviert und dann in einem Lösungsmittel, z.B. in einem Alkankohlenwasserstoff

wie Pentan oder Hexan, suspendiert.

Die Zugabe des Cokatalysators erfolgt wie sonst auch üblich unmittelbar vor der Umsetzung der Monomere oder "in situ" in Anwesenheit derselben. Die Steuerung der Reaktion sowie die Gewinnung und Aufarbeitung der Reaktionsprodukte erfolgt ebenfalls in völlig analoger Weise. Wie schon erwähnt sind aufgrund der Stabilität der Verbindungen der Formel I und der geringeren Empfindlichkeit der resultierenden Katalysatorsyteme alle diese Handlungen wesentlich problemloser und mit wesentlich weniger strikten Schutz- und Sicherheitsmaßnahmen durchführbar.

Durch die Erfindung werden somit neue Koordinations-Katalysatorsysteme mit vorteilhaften Eigenschaften sowie erheblich erweiterter Einsatzbreite zugänglich gemacht, die darüberhinaus auf die jeweiligen Anwendungsbedürfnisse hin maßgeschneidert werden können.

Beispiel 1

Zu einem aus 24,3 g (1,0 mol) Magnesium und 102,1 g (0,84 mol) 3-Dimethylaminopropylchlorid in 500 ml THF hergestellt Grignard-Reagenz tropft man bei Raumtemperatur eine Lösung von 38,2 g (0,28 mol) Zinkchlorid in 100 ml THF zu und erhitzt anschließend für 2 h auf 70 °C. Nach dem Abkühlen wird Unlösliches durch Filtration abgetrennt, das Lösungsmittel entfernt und der Rückstand im Vakuum destilliert. Man erhält Bis(3-dimethylaminopropyl)zink als kristallinen Feststoff mit Schmelzpunkt 40 °C und Siedepunkt 68 °C/0,1 mbar.

Beispiel 2

Ein aus 4,9 g (0,2 mol) Mg und 19,4 g (0,16 mol) 3-Diethylaminopropylchlorid in 100 ml THF hergestelltes Grignard-Reagenz wird bei Raumtemperatur mit 6,8 g (0,05 mol) Zinkchlorid in 100 ml THF versetzt. Nach beendeter Reaktion wird 24 h bei Raumtemperatur gerührt, filtriert, das Lösungsmittel entfernt und der Rückstand im Vakuum destilliert. Man erhält Bis(3-diethylaminopropyl)zink als farblose Flüssigkeit mit Siedepunkt 103 °C/0,1 mbar.

Beispiel 3

Aus 6,1 g (0,25 mmol) Mg und 24,3 g (0,2 mol) 3-Diethylaminopropylchlorid in 100 ml THF wird ein Grignard-Reagenz hergestellt. Anschließend werden ca. 80 ml THF entfernt und die konzentrierte Lösung mit 50 ml Pentan versetzt. Ausgefallenes Magnesiumchlorid wird durch Filtration entfernt und das Filtrat im Vakuum destilliert. Man erhält Bis(3-dimethylaminopropyl)magnesium als weißen Feststoff mit Siedepunkt 170°C/0,05 mbar.

Beispiel 4

3,0 mmol 2,6-Bis(dimethylaminomethylen)phenyllithium erhalten aus 0,82 g (3,0 mmol) 2,6-Bis(dimethylaminoethylen)phenylbromid und 1,9 ml n-Butyllithium (3,0 mmol; 1,6 mol/l in Hexan) werden zu einer Lösung von 0,4 g (3,0 mmol) Dimethylgalliumchlorid in 10 ml Hexan gegeben. Nach 12 Stunden Rühren bei Raumtemperatur wird abfiltriert, das Lösungsmittel im Vakuum abgezogen und der Rückstand im Vakuum sublimiert. Man erhält [2,6-Bis(dimethylaminomethylen)phenyl]dimethylgallium als farblose Kristalle, Schmelzpunkt 34 °C.

Beispiel 5

Analog zu Beispiel 4 erhält man aus 2,71 g (10,0 mmol) 2,6-Bis(dimethylaminomethylen)phenylbromid in 40 ml Hexan, 6,3 ml n-Butyllithium (10,0 mmol; 1,6 mol/l in Hexan) und 1,8 g (10,0 mmol) Dimethylindiumchlorid in 20 ml Hexan [2,6-Bis(dimethylaminomethylen)phenyl]dimethylindium, welches durch Kühlen einer konzentrierten Hexan-Lösung auf -30 °C in Form farbloser Kristalle gewonnen wird, Schmelzpunkt 53 °C.

Beispiel 6

Analog zu Beispiel 4 erhält man aus 2,5 g (9,2 mmol) 2,6-Bis(dimethylaminomethylen)phenylbromid in 40 ml Hexan, 5,8 ml n-Butyllithium (9,2 mmol; 1,6 mol/l in Hexan) und 1,92 g (10,0 mmol) Diethylindiumchlorid in 20 ml Hexan [2,6-Bis(dimethylaminomethylen)phenyl]diethylindium welches als farblose Kristalle gewonnen wird, Schmelzpunkt 41°C.

Beispiel 7

Analog zu Beispiel 4 erhält man aus 2,2 g (8,1 mmol) 2,6-Bis(dimethylaminomethylen)phenylbromid in 40 ml Hexan, 5,1 ml n-Butyllithium (8,1 mmol; 1,6 mol/l in Hexan) und 1,90 g (8,1 mmol) Di-n-propylindium in 20 ml Hexan [2,6-Bisdimethylaminomethylen)phenyl]di-n-propylindium, welches durch Vakuumdestillation als farblose Flüssigkeit

gewonnen wird, Siedepunkt 125 °C/0,03 mbar.

Beispiel 8

Analog zu Beispiel 4 erhält man aus 2,4 g (7,3 mmol) 2,6-Bis(diethylaminomethylen)phenylbromid in 40 ml Hexan, 4,6 ml Butyllithium (7,3 mmol; 1,6 mol/l in Hexan) und 1,5 (7,3 mmol) Diethylindiumchlorid in 20 ml Hexan [2,6-Bis(diethylaminomethylen)phenyl]diethylindium, welches durch Vakuumdestillation als farblose Flüssigkeit gewonnen wird, Siedepunkt 115 °C/0,04 mbar.

Beispiel 9

Man suspendiert 5 g 3-Dimethylaminopropyllithium (53,7 mmol) in 40 ml Pentan und tropft dazu eine Lösung von 4 g Methylgalliumdichlorid (25,7 mmol) in 20 ml Benzol. Es wird zunächst eine Stunde bei Raumtemperatur gerührt und dann 6 Stunden unter Rückfluß gekocht. Nach dem Erkalten wird von Lithiumchlorid und überschüssigem Lithiumsalz abfiltriert und das Lösungsmittel im Vakuum abgezogen. Der verbleibende Rückstand wird im Vakuum bei einer Ölbadtemperatur von 60 °C sublimiert. Man erhält Bis-(3-dimethylaminopropyl)methylgallium als weißen Feststoff mit Fp. 52° C.

Beispiel 10

Man versetzt eine Lösung von 8,71 g 3-Dimethylaminopropyllithium in 150 ml Diethylether bei einer Temperatur von -5 °C unter Lichtausschluß mit 5,45 g $ZrCl_4$, rührt anschließend eine Stunde lang und entfernt danach das Lösungsmittel im Vakuum. Der Rückstand wird mehrmals mit n-Pentan ertrahiert. Die vereinigten Extrakte werden filtriert und auf eine Temperatur von -78 °C abgekühlt, wobei sich farblose Nadeln von Tetrakis(3-dimethylaminopropyl)zirkonium ausscheiden.

## Patentansprüche

1. Verwendung von intramolekular stabilisierten metallorganischen Verbindungen der Formel I

$$X^1_l\text{-M-}[Z]_m \qquad (I)$$

worin

| | |
|---|---|
| M | ein Element aus der Gruppe Mg, B, Al, Ga, In, Sn, Zn, Ti, Zr, Lanthaniden, |
| l | die Zahlen 0, 1, 2, 3, |
| m | die Zahlen 1, 2, 3, 4, wobei l + m der Oxidationsstufe von M entspricht, |
| $X^1$ | $CR^1R^2R^3$, $NR^1R^2$, $OR^1$, |
| $R^1$, $R^2$, $R^3$ | H, $C_{1-6}$-Alkyl, wobei für den Fall, daß l = 2, zwei Reste $R^1$ zusammen auch eine $C_{2-6}$-Alkylenbrücke bilden können, |
| Z | $(CH_2)_n$-$X^2$-Y oder |

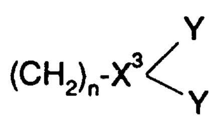

| | |
|---|---|
| n | die Zahlen 0, 1, 2, 3, |
| $X^2$ | $CH_2$, NH oder ein 5- oder 6-gliedriger aromatischer, cycloaliphatischer oder heteroaromatischer |

Ring, jeweils in o-Position mit Y substituiert,

$X^3$ CH, N oder ein 5- oder 6-gliedriger aromatischer, cycloaliphatischer oder heteroaromatischer Ring, jeweils in o,o'-Position mit Y substituiert,

Y $(CH_2)_o$-$NR^4R^5$, $(CH_2)_o$-$PR^4R^5$, $(CH_2)_o$-$OR^4$, $(CH_2)_o$-$SR^4$,

o die Zahlen 1, 2, 3,

$R^4$, $R^5$ H oder $C_{1-6}$-Alkyl bedeuten,

mit der Maßgabe, daß im Falle M = B, Al, Ga, In und Z = $(CH_2)_n$-$X^2$-Y, m nicht 1 ist, als Komponenten in Koordinations-Katalysatorsystemen.

**2.** Verwendung nach Anspruch 1 in Koordinations-Katalysatorsystemen für die Koordinationspolymerisation und die Metathese von Alkenen und Alkinen.

**3.** Koordinations-Katalysatorsysteme enthaltend Verbindungen der Formel I.

**4.** Koordinations-Katalysatorsysteme auf Basis von Übergangsmetallverbindungen der IV. bis VIII. Nebengruppe des Periodensystems der Elemente und metallorganischen Verbindungen, dadurch gekennzeichnet, daß sie mindestens eine Verbindung der Formel I enthalten.

**5.** Verfahren zur Herstellung von Polymeren durch Koordinationspolymerisation von Alkenen und/oder Alkinen, dadurch gekennzeichnet, daß ein Koordinations-Katalysatorsystem nach Anspruch 3 oder 4 eingesetzt wird.

**6.** Verfahren zur Herstellung von ungesättigten Kohlenwasserstoffverbindungen durch katalysierte Metathesereaktion von Alkenen oder Alkinen, dadurch gekennzeichnet, daß als Metathesekatalysator ein Koordinations-Katalysatorsystem nach Anspruch 3 oder 4 eingesetzt wird.

## Claims

**1.** Use of intramolecularly stabilized organometallic compounds of the formula I

$$X^1_l\text{-M-}[Z]_m \qquad (I),$$

wherein

M is an element from the group consisting of Mg, B, Al, Ga, In, Sn, Zn, Ti, Zr and lanthanides,
l is the number 0, 1, 2 or 3,
m is the number 1, 2, 3 or 4,

where l + m corresponds to the oxidation state of M,

$X^1$ is $CR^1R^2R^3$, $NR^1R^2$ or $OR^1$,
$R^1$,$R^2$ and $R^3$ are H, $C_{1-6}$-alkyl, where, in the case where l = 2, two radicals $R^1$ together can also form a $C_{2-6}$-alkylene bridge,
Z is $(CH_2)_n$-$X^2$-Y or

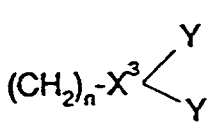

n is the number 0, 1, 2 or 3,
$X^2$ is $CH_2$, NH or a 5- or 6-membered aromatic, cycloaliphatic or heteroaromatic ring, in each case substituted by Y in the o-position,

| | |
|---|---|
| $X^3$ | is CH, N or a 5- or 6-membered aromatic, cycloaliphatic or heteroaromatic ring, in each case substituted with Y in the o,o'-position, |
| Y | is $(CH_2)_o$-$NR^4R^5$, $(CH_2)_o$-$PR^4R^5$, $(CH_2)_o$-$OR^4$, or $(CH_2)_o$-$SR^4$, |
| o | is the number 1, 2 or 3, and |
| $R^4$ and $R^5$ | are H or $C_{1-6}$-alkyl, |

with the proviso that in the case where M = B, Al, Ga or In and Z = $(CH_2)_n$-$X^2$-Y, m is not 1, as components in coordination catalyst systems.

2. Use according to claim 1 in coordination catalyst systems for the coordination polymerization and the metathesis of alkenes and alkynes.

3. Coordination catalyst systems comprising compounds of the formula I.

4. Coordination catalyst systems based on transition metal compounds of sub-groups IV to VIII of the Periodic Table of the Elements and organometallic compounds, characterized in that they comprise at least one compound of the formula I.

5. Process for the preparation of polymers by coordination polymerization of alkenes and/or alkynes, characterized in that a coordination catalyst system according to Claim 3 or 4 is employed.

6. Process for the preparation of unsaturated hydrocarbon compounds by a catalysed metathesis reaction of alkenes or alkynes, characterized in that a coordination catalyst system according to Claim 3 or 4 is employed as the metathesis catalyst.

**Revendications**

1. Application de composés organo-métalliques stabilisés de façon intramoléculaire de formule I

$$X^1_l\text{-M-}[Z]_m \qquad (I)$$

dans laquelle

| | |
|---|---|
| M | représente un élément du groupe Mg, B, Al, Ga, In, Sn, Zn, Ti, Zr, lanthanides, |
| l | représente les nombres 0, 1, 2, 3, |
| m | représente les nombres 1, 2, 3, 4, |
| | où l + m correspond au degré d'oxydation de M, |
| $X^1$ | représente $CR^1R^2R^3$, $NR^1R^2$, $OR^1$, |
| $R^1$, $R^2$, $R^3$ | représentent H, un alkyle en $C_1$ à $C_6$ où dans le cas où l = 2, deux radicaux $R^1$ peuvent également former ensemble un pont alkylène en $C_2$ à $C_6$ , |
| Z | représente |

$(CH_2)_n$-$X^2$-Y ou

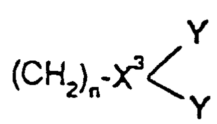

| | |
|---|---|
| n | représente les nombres 0, 1, 2, 3, |
| $X^2$ | représente $CH_2$, NH ou un noyau aromatique, cycloaliphatique ou hétéroaromatique à 5 ou 6 chaînons, à chaque fois substitué en position o par Y, |
| $X^3$ | représente CH, N ou un noyau aromatique, cycloaliphatique ou hétéroaromatique à 5 ou 6 chaînons, à chaque fois substitué en position o,o' par Y, |
| Y | représente $(CH_2)_o$-$NR^4R^5$, $(CH_2)_o$-$PR^4R^5$, $(CH_2)_o$-$OR^4$,$(CH_2)_o$-$SR^4$, |
| o | représente les nombres 1, 2, 3 |
| $R^4$ , $R^5$ | représentent H ou un alkyle en $C_1$ à $C_6$ , |

sous réserve que dans le cas où M = B, Al, Ga, In et Z = $(CH_2)_n$-$X^2$-Y , m ne vaut pas 1, code composants dans des systèmes de catalyseurs coordonnés.

2. Application selon la revendication 1 dans des systèmes de catalyseurs coordonnés pour la polymérisation coordonnée et la métathèse d'alcènes et d'alcynes.

3. Systèmes de catalyseurs coordonnés contenant des composés de formule I.

4. Systèmes de catalyseurs coordonnés à base de composés de métaux de transition du sous-groupe IV à VIII de la classification périodique des éléments et de composés organo-métalliques, caractérisés en ce qu'ils contiennent au moins un composé de formule I.

5. Procédé de préparation de polymères par polymérisation coordonnée d'alcènes et/ou d'alcynes, caractérisé en ce qu'on utilise un système de catalyseurs coordonnés selon la revendication 3 ou 4.

6. Procédé de préparation de composés hydrocarbonés insaturés par réaction de métathèse catalysée d'alcènes ou d'alcynes, caractérisé en ce qu'on utilise comme catalyseur de métathèse un système de catalyseurs coordonnés selon la revendication 3 ou 4.